(19) Europäisches Patentamt
European Patent Office
Office européen des brevets

(11) **EP 2 075 734 A1**

(12) **EUROPEAN PATENT APPLICATION**

(43) Date of publication:
**01.07.2009 Bulletin 2009/27**

(51) Int Cl.:
*G06F 21/00* (2006.01)        *G07F 7/10* (2006.01)
*H04L 9/32* (2006.01)

(21) Application number: **08172442.9**

(22) Date of filing: **19.12.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (71) Applicant: **Daon Holdings Limited**<br>**George Town,**<br>**Grand Cayman (KY)** |
| (30) Priority: **21.12.2007 US 963246** | (72) Inventor: **Peirce, Michael**<br>**5, Dublin (IE)** |
| | (74) Representative: **Keane, Paul Fachtna et al**<br>**Hanna, Moore & Curley**<br>**13 Lower Lad Lane**<br>**2 Dublin (IE)** |

(54) **Anonymous biometric tokens**

(57)    A biometrically enabled machine readable token is described such that the token is biometrically associated with the user or owner of the token. Such a token may be generated by initially providing biometric data of the user, and concealing the biometric data such that the biometric data is selectively accessible. The concealed biometric data is then used in generation of a token request message either by embedding the concealed biometric data into the token request message or by providing a concealed link thereto within the token request message. Once a token request message is received by a token issuer the concealed biometric data may be associated with the token. As the biometric data is concealed the specifics of that data are not accessible to third parties. Optionally the authenticity of the token may be effected by having the token issuer digitally signing the token.

FIGURE 1

**Description**

**Field of the Invention**

The present invention relates to machine readable tokens. The invention more particularly relates to a machine readable token incorporating concealed biometric data such that while the token is associated with biometric data that data is anonymous. Such tokens may subsequently be authenticated by the user based on their biometric data.

**Background**

Machine readable tokens are well known in the art. Such tokens are typically issued from a centralized issuing server, or from a plurality of servers which are designed to co-operate together for issuing the tokens. The server is programmed to issue valid tokens that cannot be easily replicated by another entity. Typically, when the token is used to authenticate the identity of the person its authenticity is validated to confirm that it was issued by a legitimate entity. Ideally the issuing server or entity is an independent third party such that a user presenting the token has no relationship with the generator of the token such that the token can be trusted as a valid token.

A software token will be understood by those skilled in the art to mean a piece of data that is issued by a trusted issuing authority. The software token may or may not be stored on a physical hardware token such as a memory card or smart card. Within a software token-based system, the issuing authority will typically digitally sign the data or token to allow a third party to independently validate its authenticity and to verify that its contents have not been altered.

Software tokens are used in numerous applications, for example, access control, as identity documents, for travel and transport, as entertainment tickets, as monetary tokens, as coupons, as cheques, as legal documents, as receipts, as lottery tickets, etc. Often the application will require that the software token be linked to a person. The software token may be linked to the person by incorporating data containing particulars which are unique to that person. The identification data may include a person's biographic details (e.g. name, age, address) and/or biometric data (e.g. face, fingerprints, iris images). For example, many electronic passports incorporate the holder's biographic data and one or more biometrics such as finger, face, or iris images. The identification data, including biometric data must be submitted to the issuing authority issuing the tokens, so that the biometric data can be included in the digitally signed software tokens.

While providing biometric data to the token issuing authority is acceptable for some applications, such as e-passport issuance, there are many other legitimate applications where this is not desirable. It will be understood that the provision of biometric information on a token may make the biometric information subsequently accessible to persons of nefarious background who may wish to implement some sort of identity theft. In software tokens known heretofore the token issuer will always have access to the biometric data, and the person's biographic details. By virtue of the fact that the biometric data is readily available to the issuing authority there is a possibility that the issuing authority could use the biometric data for other purposes. For example, the issuing authority could perform background searches against existing internal and external biometric databases, create a transaction audit trail for an identity by linking biometric identities across transactions, or sell the biometric data to third parties for alternative purposes. As biometrics become ubiquitous and this information is shared between issuers, it may be possible to build a very detailed profile of all transactions and data that is linked to a specific individual identity. Furthermore the security of the issuing authority cannot be guaranteed and the biometrics may be compromised if the server security is overcome.

Therefore, giving a copy of the biometrics to the issuing authority affords no privacy, and also exposes the biometrics to further risks and potential abuse.

Notwithstanding these disadvantages there is still a benefit in incorporating a biometric relationship between the issued token and the presenter of the token such that the authenticity of the person using the token can be later established.

**Summary**

These and other problems are addressed in accordance with the teaching of the present invention by provision of anonymous biometric tokens. Such a biometrically enabled machine readable token is biometrically associated with the user or owner of the token but the biometric information on that token is concealed such that the token appears anonymous. In accordance with the teaching of the present invention, such a token may be generated by initially providing biometric data of the user, and then concealing the biometric data such that the biometric data is selectively accessible. The concealed biometric data is then used in generation of a token request message either by embedding the concealed biometric data into the token request message or by providing a concealed link thereto within the token request message. Once a token request message is received by a token issuer the concealed biometric data may be associated with the token. As the biometric data is concealed the specifics of that data are not accessible to third parties. Optionally the authenticity of the token may be effected by having the token issuer digitally signing the token.

Accordingly a method according to claim 1 is provided. Advantageous embodiments are provided in the claims dependent thereto. A machine readable token is also provided.

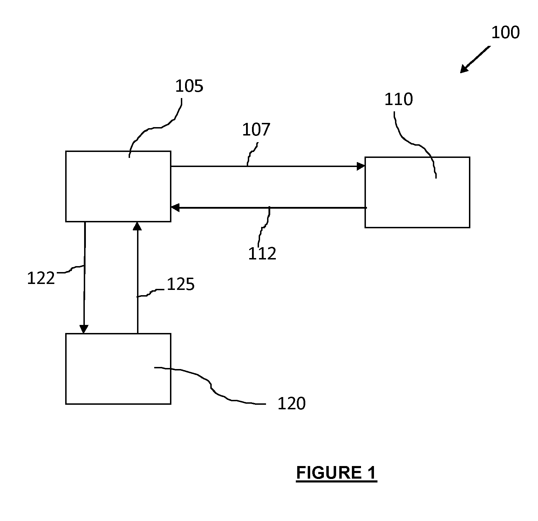

These and other features will be better understood with reference to Figure 1 which is provided to assist in an understanding of the teaching of the invention.

## Brief Description Of The Drawings

The present application will now be described with reference to the accompanying drawing in which:

Figure 1 is a block diagram of a system used for issuing a machine readable token for facilitating authenticating a user in accordance with the teaching of the present invention.

## Detailed Description of the Drawings

The invention will now be described with reference to an exemplary system for generating machine readable tokens and anonymous biometric tokens generated therefrom which are both provided to assist in an understanding of the teaching of the invention. It will be understood that the diagram is provided to assist in an understanding and is not to be construed as limiting in any fashion.

Referring to Figure 1 there is illustrated a token issuing system 100 for generating a machine readable token comprising concealed biometric data. Within the context of the present invention the term "concealed biometric data" is intended to define a presentation of the biometric data in a form that does not reveal the specifics of the actual biometric data. In this way while the biometric information is related to the token the token in itself is anonymous. There are many ways to conceal the biometric information and it is not intended to limit the present invention to any one specific technique. For example the biometric data may be subjected to a blinding function that combines the biometric with another factor such as a blind identifier to generate a blinded biometric. To recreate the originating biometric it is necessary to apply a reverse technique to that of the blinding function, and as such the re-creator would need to know the original blinding function and associated parameters that were applied. Another example of a reversible concealing function is the logical operation exclusive disjunction, also called exclusive OR (XOR). These and other examples of concealing functions will be well known to the person skilled in the art of cryptography and the like. As an alternative to a reversible concealing function, the original biometric data could be subjected to a one way hash function or the like which would mathematically change the form of the biometric data. Such one way functions are highly effective in changing the form of the biometric data but are not reversible for biometric data. If implementing such a one way operation it will be understood that it is desirable that the user would maintain a copy of the originating biometric sample or template that was used to fabricate the one way hash representation for the subsequent authentication of the veracity of the token. This will be discussed in more detail later.

Within the context of the present invention the term "machine readable token" is intended to define a data structure comprising data in a format which can be read by a machine such as a computer. Thus, the machine readable token may or may not be stored on a physical hardware token such as a memory card or smart card. It will be appreciated by those skilled in the art that the term machine readable token includes both software tokens and hardware tokens. In this way it will be understood that machine readable tokens within the context of the teaching of the present invention includes security tokens such as hardware tokens, authentication tokens or cryptographic tokens in the form of a physical device that enables authentication of authorized users. Alternatively such tokens could also be implemented in the form of software tokens that are simply storeable in the memory of a electronic computing device, and may be used as desired by the owner or user of the token.

The issuing system 100 comprises a user 105 typically having an input means, such as a biometric capture device configured for capturing a biometric image of a subject or receiving a previously captured biometric. It will be understood that the specifics of such biometric capture devices will be well known to the person skilled in the art and it is not intended to limit the teaching of the present invention to any specific arrangement. Such devices may be configured for effecting a capture of one or more biometric modalities such as a finger print or iris image, and may also be configured for receiving biographic data associated with the user such as the name, age, and address of the user. On receipt of the biometric image a concealment operation is performed where for example a transformation or other mathematical function is implemented on the biometric data to generate a concealed biometric representation which is generated from the biometric but which in itself provides no information on the specifics of the generating biometric. The biometric data may consist of a single sample or template or can contain multi-biometric samples or templates, including data from multiple modalities, instances, presentations, sensors, and algorithms. Additional non-biometric data, such as the aforementioned biographic data or transaction related data may also optionally be concealed along with the biometric data.

The user 105 or user associated hardware/software generates a token request message, "M" which incorporates the concealed biometric representation and may include additional information such as for example the biographic data of the provider of the biometric data. It will be understood that by providing a concealed biometric representation that the data is linked to one or more specific biometric types but the exact nature of the biometric data is concealed or anonymous within the message. In this way access to and usage of the originating biometric data may be controlled. A user can selectively allow certain third parties access to the biometric data or may for example only use the concealed biometric data in subsequent authentication requests without ever revealing the true nature of the biometric data to third parties.

In an exemplary arrangement, the user 105 effects the concealment operation to conceal the biometric data m by multiplying the biometric data by a blind identifier, namely, random value r. It will be understood however that this type of operation is provided to assist the reader in an understanding of the teaching of the invention and it is not intended to limit the invention to any one type of concealment operation.

On generating the token issuance request, the request message "M" is transmitted to a token issuing means or token issuer 110 as part of a token request message, step 107. Such token issuers are well known in the art and are typically provided by trusted third parties. An example of such an issuing means is an issuing server 110 which is in communication with the user 105 and receives the token request message "M". On receipt of the token request, the token issuer extracts the concealed biometric data from the request and embeds that data or links that data to a generated token. In this way an issued token will have a biometric link to the requesting user, but the true form of the biometric data is concealed or anonymous within the token.

To provide a further level of security, the issuing server 110 may authenticate the generated token by applying a digital signature specific to the issuing server 110 such that subsequent interrogation of the generated token will provide a link back to the issuing server 110. Such a digital signature provided by the issuing server 110 allows a third party to independently validate the authenticity of the token and to verify that its contents have not been altered. In other words, the digital signature provides proof that the token was generated by a legitimate entity as is common practice in token based authentication systems.

It will be appreciated that the issuing server 110 is unable to see the specifics of the originating biometric data as that data has been provided in the form of concealed biometric data by the user 105 prior to transmission of the token request message "M" to the issuing server 110. Thus it will be understood that the issuing server 110 digitally signs the generated token without seeing the biometric data that is linked to the token.

While Figure 1 illustrates a single issuing server 110 it will be appreciated by those skilled in the art that the term 'server' may also incorporate a plurality of servers which are designed to co-operate together for issuing the tokens.

The generated token is returned by the issuing server 110 to the input device or user 105, step 112, where it may be stored for subsequent use or used immediately. Such use will typically require communication by the user with a third party device 120, steps 122, 125 which uses the token for authenticating the identity of the subject during applications, for example, access control, as identity documents, for travel and transport, as entertainment tickets, as monetary tokens, as coupons, as cheques, as legal documents, as receipts, as lottery tickets, etc. It will be appreciated therefore that the type of token generated may have be specific to one or more specific activities and it is not intended to limit the teaching of the present invention to any one specific type or usage of tokens.

While the token is linked to biometric data that is specific and personal to a presenter of the token, the specifics of that biometric data is concealed to the third party device 120. The user controls whether or not the third party device 120 has access to the biometric data. Depending on the application the third party may be provided with access to the biographic data associated with the user and the biometric data of the user.

Thus it will be understood that within the context of the teaching of the present invention that biometric data is linked to tokens that are provided by token generators and such tokens are presented to third parties as part of a token usage program but the specifics of the biometric data are not immediately apparent to either the token generator or the third party. The traceability of a token to a specific user is effected without compromising the integrity of the actual biometric data of that user. The revealing of the specifics of the biometric data is controlled by the owner of the biometric data.

An example of the operation of a system provided in accordance with the teaching of the invention now follows.

In operation, the user 105 provides or inputs their biometric and biographic data to a hardware/software module provided in accordance with the teaching of the invention and hereinafter referred to as an input device. The input device/ user 105 conceals the biometric data by multiplying the biometric data with a random value r such that the issuing server 110 is unable to see the biometric data. The random value r is chosen such that:

$$gcd(r,N)=1 \qquad\qquad (1)$$

Where gcd() is the greatest common divisor mathematical function, and N is an RSA public-key algorithm modulus.

The user/input device 105 generates a token message "M" comprising the concealed biometric data and the biographic data associated with the user. The issuing server 110 receives the token message "M" and digitally signs the token message using a public key signature algorithm such that the biometric data is linked to the biographic data. In this example, the RSA digital signature algorithm is used for digitally signing the token message "M", however, it will be appreciated by those skilled in the art that other suitable public key signature algorithms may be used. Examples of such algorithms include the DSA signature algorithm, Schnorr signature algorithm, Ferguson's randomized blind signature algorithm, Chaum-Person double Schnorr signature algorithm, Chaum's blind unanticipated signature algorithm, ElGamal signature algorithm, and signature algorithms utilizing elliptic curve cryptography

The issuing server 110 exponentiates the token message "M" received from the user/ input device 105 with a secret key exponent d, modulus N. The digital signature may be later verified by the third party device 120 using a public key exponent e, such that multiplying the public key exponent e with the secret key exponent d, equals one modulus N.

$$e*d=1 \text{ modulus } N \tag{2}$$

Thus the digital signature becomes:

$$(m(r^{\wedge}e)^{\wedge}d) \bmod n \tag{3}$$

By multiplying the digitally signed token message with r^-1 results:

$$(m(r^{\wedge}e)^{\wedge}d)*r^{\wedge}\text{-}1 = (m^{\wedge}d)(r^{\wedge}ed)(r^{\wedge}\text{-}1) = (m^{\wedge}d)r(r^{\wedge}\text{-}1) = m^{\wedge}d. \tag{4}$$

Thus, the token message is digitally signed without the issuing server 110 being able to see the biometric data.

The user may utilize the privacy protected biometric token at third party devices 120. While usage may not require biometric authentication, if the third party requires biometric authentication, then tokens generated in accordance with the teaching of the invention can be used to provide such authentication.

It will be understood that the purpose of biometric authentication is to authenticate based on a user provided biometric. This may be in the form of testing a previously provided biometric against a new user provided biometric. In the case of a reversible concealment operation such as a blinding or XOR operation, in order to reveal the original biometric data to the third party the user can reveal the concealment factor that was used to originally create the concealed biometric data to the third party device 120. This concealment factor may be in the form of a random number, r, that was combined with the biometric data to generate the concealed biometric data. The third party may then apply the random value r to the concealed biometric data in the token to extract the specifics of the original biometric data.

Biometric authentication of the user can then be performed by comparing the biometrics captured at transaction time against those incorporated in the token. The third party device 120 can be assured that the biometric data were linked to the token by the issuing server 110 from the issuer's digital signature, thereby proving ownership of the token to the user after the biometric authentication.

If the concealment was by means of a one way hash function it will be understood that recreation of the original biometric is not feasible. However if the user has stored the biometric data that was used to create the one way hash function then supply of that biometric data to the third party together with details of the one way hash function used will enable the creation of a duplicate concealed biometric data. The original and duplicate can then be compared to prove that the supplied biometric data is indeed linked to the token and ensure authenticity of the user's claim to proprietorship of the token. Additionally, a biometric authentication may take place by comparing the supplied biometric data, which has been shown to be linked to the token, with newly captured biometric data from the user.

An alternative method of concealing the biometric data from the issuing server 110 during token creation is to use encryption. In such an arrangement, the user 105 encrypts the biometric data using an encryption key supplied by the user, and relays the encrypted biometric data to the issuing server 110. The issuing server 110 combines the concealed biometric data and the biographic data to form the token data, which is then digitally signed using a public key signature algorithm. The issuing server 110 is unable to decrypt the biometric data since it does not know the secret key, held by the user.

The user may utilize the privacy protected biometric token at third party devices 120. In order to demonstrate ownership of the token, the user can reveal the secret encryption key to the third party. The third party may decrypt the biometric data using the secret encryption key supplied to the third party by the user. Biometric authentication of the user can then be performed by comparing the biometrics captured at transaction time against those encrypted on the biometric token. The third party device 120 can be assured that the biometrics were linked to the token by the issuing server 110 from the issuer's digital signature, thereby proving ownership of the token to the user after the biometric authentication.

An alternative mechanism may be used for concealing the biometric data during token generation. The input device 105 may apply a logical operation exclusive disjunction, an exclusive-OR (XOR) function, to conceal the biometric data by combining it with another piece of random data of the same length to produce the concealed biometric data. The concealed data can be revealed by using the random data that was used to generate it, and this would be done during a later transaction where the user wishes to be biometrically authenticated using the token.

A further method of concealing the biometric data during token generation may also be employed. In this method, the actual biometric data is never sent to the issuing server 110 in concealed form or otherwise. Instead, a concealed link to the biometric data is provided to the issuing server 110 from the user 105, and the concealed link is included in the token message "M". Such a concealed link may take the form of a one-way hash of the original biometric data. For additional security a salted one-way hash may be used where additional data, the salt, such as a transaction identifier and/or a secret value is included as part of the hash. The issuing server 110 includes this one-way hash in the signed token, but can derive no useful information from it. Even if the issuing server 110 has a copy of the biometric data from a different source it will not be able to generate the same one-way hash value from them, and link the token to that user, because of the nature of biometric samples whereby they will always differ slightly from capture to capture. In addition, even if the issuing server 110 has an identical copy of the biometric data from other sources, it will be unable to link the user to the token without knowledge of the salt value applied in the one-way hash.

After token issuance, the user can release the original biometric data to a third party device 120 and the third party device 120 can confirm they are linked to the token by re-generating the one-way hash value. Biometric authentication can then take place. Alternatively, the link may also point to a location from where the biometric data can be retrieved, such as a public directory or a private protected directory. In this scenario the link may be concealed using any of the concealing mechanisms as described above including a public key signature, encryption, XOR function, or one-way hash function.

While the biometric data has been described as being concealed from the issuing server 110 during token generation, it will be readily appreciated by those skilled in the art that other sensitive data, which the user does not want to reveal to the issuing server 110 could also be concealed. For example, the concealed data may also include biographic details such as the user's name, age, and address, transaction data, or other application-specific data. However, later during a transaction by a third party device 120, the concealed data could be revealed. A user might also include links to other biometric tokens or identity documents, such as their electronic passport, in the new token data. This would allow the new token to be linked to an existing identity document which could be used to authenticate the user during token usage. The link to the identity document could be hidden, or not, from the issuer using any of the aforementioned techniques.

In addition, the user 105 may incorporate usage restrictions in either the hidden or unhidden parts of the token data. For example, the user might specify that they want the token to be used by the holder in a specific geographic location, during certain times, or for specific usages. Additionally, the issuing server 110 may also impose their own usage restrictions as part of the unhidden data on the token.

It will be understood that what has been described herein are exemplary ways of generating anonymous or concealed biometric tokens and usage of such concealed tokens. While a method of associating a machine readable token with a user of that token by linking concealed biometric data of the user to the token has been described it will be understood that it is not intended that the teaching of the present invention be limited in any way except as may be deemed necessary in the light of the appended claims. While advantageous arrangements and implementations have been described modifications can be made to the heretofore described without departing from the spirit and scope of the present invention. Furthermore, the words comprises/comprising when used in this specification are to specify the presence of stated features, integers, steps or components but does not preclude the presence or addition of one or more other features, integers , steps, components or groups thereof.

**Claims**

1.  A method of associating a machine readable token with a user of that token, the method comprising:

    (a) receiving biometric data from the user and performing a concealment operation on that biometric data to generate concealed biometric data;
    (b) generating a token request message for a token, the token request message including the concealed biometric data,
    (c) deriving a token including the concealed biometric data from the token request message.

2.  The method as claimed in claim 1, wherein the concealed biometric data is concealed:

    (a) by applying a reversible function to the user supplied biometric data, or
    (b) by applying a non-reversible function to the user supplied biometric data, or
    (c) by encrypting the biometric data with an encryption key or by applying an exclusive-OR (XOR) function to the biometric data or by combining the biometric data with another number.

3.  The method as claimed in claim 1, wherein the concealment operation:

    (a) utilises random data, or
    (b) provides for computation of a one-way hash of the biometric data, or
    (c) provides for generation of a concealed link in the form of computation of a one way hash of the original biometric data and additional data.

4.  The method of claim 3 wherein the random data is the same length as the biometric data.

5.  The method as claimed in claim 1, wherein the receiving of biometric data is effected through use of a biometric capture device.

6.  The method as claimed in claim 1, wherein the generating a token includes application of a digital signature to the token.

7.  The method as claimed in claim 6, wherein the application of a digital signature operably utilises a public key signature algorithm comprises at least one of the following algorithms an RSA signature algorithm, DSA signature algorithm, Schnorr signature algorithm, Ferguson's randomized blind signature algorithm, Chaum-Person double Schnorr signature algorithm, Chaum's blind unanticipated signature algorithm, ElGamal signature algorithm, and signature algorithms utilizing elliptic curve cryptography.

8.  A method of authenticating a user presented machine readable token, the method including:

    a) associating a machine readable token with a user of that token according to the method of claim 1,
    b) receiving the machine readable token from the user,
    c) extracting the original biometric data from the concealed biometric data, and
    d) comparing the extracted biometric data with user provided biometric data to confirm legitimacy of the user ownership of the token.

9.  The method as claimed in claim 8, wherein the extraction of the original biometric data is effected through reverse application of a concealment operation used to generate the concealed biometric data.

10. A method of authenticating a user presented machine readable token, the method including:

    a) associating a machine readable token with a user of that token according to the method of claim 2,
    b) receiving the machine readable token from the user,
    c) receiving a copy of the original biometric data used to generate the concealed biometric data from the user, and
    d) applying the same non-reversible function to the received copy to regenerate the concealed biometric data.

11. A method as claimed in claim 10, wherein the method includes the further step of comparing the regenerated concealed biometric data with token associated concealed biometric data to confirm legitimacy of the user ownership of the token.

12. A method as claimed in claim 10, wherein the method includes the further steps of capturing a biometric and comparing that captured biometric with the copy of the original biometric data used to generate the concealed biometric data.

13. A machine readable token generated by an issuing party comprising:

concealed biometric data, and
a digital signature indicative of the identity of the issuing party which issued the token.

14. A machine readable token as claimed in claim 13, wherein the token includes additional data.

15. A machine readable token as claimed in claim 14, wherein the additional data is:

(a) biographic data associated with the user, and/or
(b) application specific data, and/or
(c) at least partly concealed such that it is selectively accessible.

**FIGURE 1**

Europäisches
Patentamt
European
Patent Office
Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 635 503 A (SONY CORP [JP]) 15 March 2006 (2006-03-15) * paragraphs [0002], [0005], [0068] - [0088] * | 1-15 | INV. G06F21/00 G07F7/10 H04L9/32 |
| A | US 2002/046336 A1 (KON MASASHI [JP] ET AL) 18 April 2002 (2002-04-18) * pages 8-45 * | 1-15 | |

| | | | TECHNICAL FIELDS SEARCHED (IPC) |
|---|---|---|---|
| | | | G06F G07F H04L |

The present search report has been drawn up for all claims

| Place of search | Date of completion of the search | Examiner |
|---|---|---|
| Munich | 2 April 2009 | Heselius, Per |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 08 17 2442

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2009

| Patent document cited in search report | | Publication date | Patent family member(s) | | Publication date |
|---|---|---|---|---|---|
| EP 1635503 | A | 15-03-2006 | CN<br>JP<br>US | 1746809 A<br>2006079181 A<br>2006050931 A1 | 15-03-2006<br>23-03-2006<br>09-03-2006 |
| US 2002046336 | A1 | 18-04-2002 | JP | 2002175277 A | 21-06-2002 |